# EUROPÄISCHE PATENTSCHRIFT

(11) **EP 2 329 926 B1**
(45) Veröffentlichungstag und Bekanntmachung des Hinweises auf die Patenterteilung: **13.03.2013**
(21) Anmeldenummer: 10191216.0
(22) Anmeldetag: 15.11.2010
(51) Int. Cl.: B25J 19/00

(54) **Leitungsschutzvorrichtung für einen Industrieroboter und Industrieroboter mit einer solchen Leitungsschutzvorrichtung**
Conduit protection device for an industrial robot and industrial robot with such a conduit protection device
Dispositif de protection de ligne pour un robot industriel et robot industriel doté d'un tel dispositif de protection de ligne

(30) Priorität: 01.12.2009 DE 102009056455
(43) Veröffentlichungstag der Anmeldung: 08.06.2011
(73) Patentinhaber: KUKA Roboter GmbH, 86165 Augsburg (DE)
(72) Erfinder: Karlinger, Stefan, 86199 Augsburg (DE); Krumbacher, Rainer, 87675 Rettenbach (DE)
(74) Vertreter: Patentanwälte Funk & Böss GbR

(56) Entgegenhaltungen:
- EP-A1- 1 225 011
- EP-A1- 1 355 400
- EP-A1- 1 640 121
- EP-A2- 1 453 170

## Beschreibung

Die Erfindung betrifft eine Leitungsschutzvorrichtung für einen Industrieroboter mit wenigstens einer Energieleitung und einen Industrieroboter mit einer solchen Leitungsschutzvorrichtung.

Aus der EP 1 453 170 A2 ist eine Vorrichtung zum Verlegen einer Vielzahl von Leitungselementen zwischen einem ersten Element und einem zweiten Element bekannt, die in Bezug zueinander um eine Drehachse drehbar sind, wobei die Leitungselemente eine elektrische Leitung und/oder eine Fluidleitung aufweisen, wobei ein Ende jedes Leitungselements durch ein Halterungselement am ersten Element festgehalten wird und das andere Ende davon durch ein Halterungselement am zweiten Element festgehalten wird. Eine Vielzahl der Leitungselemente ist in eine erste und eine zweite Gruppe aufgeteilt, wobei die erste Gruppe von Leitungselementen verlegt wird, um sich durch ein inneres Loch des inneren Rohrelements zu erstrecken und die zweite Gruppe von Leitungselementen verlegt wird, um sich durch einen ringförmigen Spalt zu erstrecken, der zwischen dem inneren Rohrelement und dem äußeren Rohrelement gebildet wird. So soll eine Vorrichtung zum Verlegen von Leitungselementen bereitgestellt werden, welche einfach auf einen Teil mit einem äußeren Element und einem inneren Element angewandt werden kann, die in Bezug aufeinander drehbar sind, wie beispielsweise einen Aufsattelteil eines Roboters, insbesondere einen Gelenkteil, und welche einen kleinen Raum zum Einbau benötigt und eine Anforderung an einen großen Bereich an Relativbewegung zwischen dem äußeren Element und dem inneren Element gestattet.

Die EP 1 640 121 A1 beschreibt eine Leitungsführungsvorrichtung, die fest mit einer Schwinge verbunden ist.

Die EP 1 355 400 A1 beschreibt ein Handgelenksglied eines Roboters, das einen Abrundungsabschnitt aufweist. Dieser Abrundungsabschnitt, bildet keine Leitungsschutzvorrichtung, die sich bezüglich eines Rohrbauteils drehen würde. Vielmehr dreht sich das erste Handgelenksglied lediglich bezüglich eines zweiten Handgelenksglieds und nicht gegenüber einem Rohrbauteil.

Aufgabe der Erfindung ist es, einen Industrieroboter mit einer Leitungsschutzvorrichtung zu schaffen, die mit einfachen Mitteln Energieleitungen zwischen einem Grundgestell und einem Karussell des Industrieroboters zu schützen vermag.

Erfindungsgemäß wird ein Industrieroboter gemäß Anspruch 1 vorgeschlagen.

Der Grundringabschnitt bildet einen Tragabschnitt für den Hohlzylinderabschnitt, den Innenkantenabrundungsabschnitt und den Radiallagerabschnitt. Grundringabschnitt, Hohlzylinderabschnitt, Innenkantenabrundungsabschnitt und Radiallagerabschnitt können einteilig oder auch mehrteilig aus Einzelteilen zusammengesetzt ausgebildet sein.

Unter wenigstens einer Energieleitung wird ein Roboterkabelsatz verstanden, der elektrische Energieversorgungsleitungen ggf. auch Signalleitungen zu den Motoren umfasst und/oder Energiezuführungen verstanden, die Leitungen, beispielsweise elektrische Leitungen, Kalt- und/oder Warmwasserleitungen, Fluid- und/oder Druckleitungen zu Werkzeugen des Industrieroboters umfassen. Die Energieleitungen können in Einzelsträngen oder in Kabelbündel, insbesondere mit Schutzschläuchen versehen, durch die erfindungsgemäße Leitungsschutzvorrichtung geführt sein.

Indem die Leitungsschutzvorrichtung einen Radiallagerabschnitt zur drehbaren Lagerung der Leitungsschutzvorrichtung bezüglich des Rohrbauteils des Industrieroboters aufweist, kann Verschleiß der wenigstens einen Energieleitung verringert werden und die Bewegung des Karussells bezüglich des Grundgestells reibungsärmer erfolgen.

Es kann vorgesehen sein, einen Industrieroboter mit einer erfindungsgemäßen Leitungsschutzvorrichtung werkseitig zu versehen und vormontiert auszuliefern oder es kann vorgesehen sein, die erfindungsgemäße Leitungsschutzvorrichtung separat zur Nachrüstung anzubieten.

In einer Ausgestaltung kann der Radiallagerabschnitt die Lagerfläche eines Gleitlagers bilden. Der Radiallagerabschnitt kann von einem umfangsseitig der Leitungsschutzvorrichtung radial vorstehenden Ringvorsprung gebildet werden. In diesem Fall ist der radial vorstehende Ringvorsprung der Leitungsschutzvorrichtung ausgebildet, in eine korrespondierende Ringnut eines Tragbauteils, wie beispielsweise das Grundgestell des Industrieroboters oder das Rohrbauteil einzugreifen. Alternativ kann der Radiallagerabschnitt von einer nutförmigen Vertiefung in der Seitenwand der Leitungsschutzvorrichtung gebildet werden. In diesem Fall ist die nutförmige Vertiefung der Leitungsschutzvorrichtung ausgebildet, einen korrespondierenden radial, insbesondere nach innen vorstehenden Ringvorsprung eines Tragbauteils, wie beispielsweise das Grundgestell des Industrieroboters oder das Rohrbauteil zu umfassen.

In einer alternativen Ausgestaltung kann der Radiallagerabschnitt einen Sitz für ein separates Wälzlager bilden. In dieser Ausgestaltung ist das Gleitlager durch ein Wälzlager ersetzt. Dabei können handelsübliche Wälzlager verwendet werden. Insbesondere können je nach Bedarf einfache Rillenkugellager, Rollenlager, Kegel- oder Tonnenrollenlager eingesetzt werden. Zweckmäßiger Weise können insbesondere Radiallager zur Anwendung kommen. Der Radiallagerabschnitt der Leitungsschutzvorrichtung bildet dabei eine Sitz beispielsweise für einen Innenring des Wälzlagers. Der Radiallagerabschnitt der Leitungsschutzvorrichtung kann ggf. von einer glatten Wand eines Zylindermantels der Leitungsschutzvorrichtung gebildet werden, auf die der Innenring des Wälzlagers aufgepresst oder aufgeklebt sein kann.

Der Hohlzylinderabschnitt kann zum Einschieben in das Rohrbauteil einen Außendurchmesser aufweisen, der passgenau oder mit geringem Spiel an den Innendurchmesser des Rohrbauteils angepasst ist. Mittels des Hohlzylinderabschnitts kann die Leitungsschutzvorrichtung zumindest für ein Stück in das Rohrbauteil eingeschoben werden. Der Hohlzylinderabschnitt bildet insoweit eine Art von Nippel bzw. Fitting, um einen Übergang von Rohrbauteil zu Innenkantenabrundungsabschnitt der Leitungsschutzvorrichtung zu schaffen.

Alternativ kann der Hohlzylinderabschnitt zum bündigen Anschließen an das Rohrbauteil einen Innendurchmesser aufweisen, der dem Innendurchmesser des Rohrbauteils entspricht. Dabei können Hohlzylinderabschnitt der Leitungsschutzvorrichtung und Rohrbauteil jeweils stirnseitig aneinander stoßen oder lediglich unter Belassen eines geringfügigen Spaltes miteinander fluchten.

Die Leitungsschutzvorrichtung kann mehrteilig, insbesondere zweiteilig längs geschnitten ausgebildet sein. Wie bereits erwähnt können Grundringabschnitt, Hohlzylinderabschnitt, Innenkantenabrundungsabschnitt und Radiallagerabschnitt einteilig oder auch mehrteilig aus Einzelteilen zusammengesetzt ausgebildet sein. Um beispielsweise eine leichte Montage im Rahmen einer Nachrüstung zu ermöglichen, kann die ringförmige Leitungsschutzvorrichtung insbesondere zweiteilig längs geschnitten ausgebildet sein. Dabei wird die ringförmige Leitungsschutzvorrichtung von zwei C-förmigen Halbschalen gebildet, die zu einem geschlossenen Kreisring zusammengefügt werden können.

Ein erfindungsgemäßer Industrieroboter, weist die folgenden Merkmale auf:
- ein Grundgestell,
- ein Karussell,
- ein sich zwischen Grundgestell und Karussell drehendes Rohrbauteil, durch das wenigstens eine Energieleitung geführt ist, und
- eine erfindungsgemäße Leitungsschutzvorrichtung, wie beschrieben.

Das Rohrbauteil kann fest mit dem Grundgestell verbunden sein. Das Rohrbauteil kann insbesondere eine Hohlwelle sein. Die Hohlwelle kann teil eines Getriebes, insbesondere Planetengetriebes sein, welches das Karussell mit dem Grundgestell drehbar verbindet. Die erfindungsgemäße Leitungsschutzvorrichtung ist dabei durch das Rohrbauteil bzw. die Hohlwelle hindurch geführt. Alternativ kann das Rohrbauteil fest mit dem Karussell verbunden sein.

Da der Gefahrenpunkt am unteren Ende der Hohlwelle liegt und der freie Durchmesser der Hohlwelle nicht verkleinert werden sollte, kann die erfindungsgemäße Leitungsschutzvorrichtung unterhalb der Hohlwelle und außerhalb derselben angeordnet werden. Dort kann die Leitungsschutzvorrichtung, die eine Abweisebuchse bzw. einen Schutzring bilden kann, sich frei drehend aber axialfest und kippsteif gelagert werden. Die Innenkontur der Abweisbuchse beginnt an der Hohlwelle mit dem dort vorgegebenen Durchmesser und erweitert sich in einer Art nach unten, um den Energieleitungen mehr Freiraum zu verschaffen und diese sicher von der Unterkante der Hohlwelle fern zu halten.

Die Lagerung kann ein Wälzlager, bspw. ein Kugellager übernehmen. Ein Ansatz außen an der Abweisbuchse mit der Größe eines Kugellagers und geringfügigem Spiel für eine Dauerschmierung kann alternativ als Gleitlager dienen.

Die erfindungsgemäße Leitungsschutzvorrichtung bzw. die Abweisbuchse kann aus einem gleitfähigem Werkstoff, insbesondere aus Kunststoff wie z.B. Polyoxymethylen (POM) hergestellt sein.

Wenn eine Leitung anliegt, dann nur an der erfindungsgemäße Leitungsschutzvorrichtung bzw. an der Abweisbuchse und nicht an dem scharfkantigen Ende des Rohrbauteils bzw. der Hohlwelle. Anstatt aneinander zu reiben, dreht sich die Leitungsschutzvorrichtung bzw. Abweisbuchse mit der Energieleitung mit, so dass nur noch ein Anpressdruck verbleibt, ohne Reibung.

Der erfindungsgemäße Industrieroboter kann ein Wälzlager, insbesondere Radiallager zum drehbaren Lagern der Leitungsschutzvorrichtung bezüglich des Rohrbauteils aufweisen. Gegenüber einem Gleitlager hat ein Wälzlager den Vorteil, dass höhere Kräfte bei geringerer Reibung aufgenommen werden können. So ist eine reibungsarme, störungsfreie Bewegung des Karussells auf dem Grundgestell gewährleistet. Gerade bei einer geringeren Dynamik der Grundachsen des Industrieroboters gegenüber den Handachsen können erfindungsgemäß Wälzlager zur drehbaren Lagerung der Leitungsschutzvorrichtung zweckmäßig sein.

Das Wälzlager bzw. das Radiallager kann in einer Variante einerseits mit dem Radiallagerabschnitt der Leitungsschutzvorrichtung und andererseits mit dem Grundgestell verbunden sein. Ist der Innenring des Wälzlagers mit der Leitungsschutzvorrichtung verbunden, so kann der Außenring des Wälzlagers an dem Grundgestell festgesetzt sein. Ist der Außenring des Wälzlagers mit der Leitungsschutzvorrichtung verbunden, so kann der Innenring des Wälzlagers an dem Grundgestell festgesetzt sein. Das Wälzlager kann beispielsweise in einen vorgeformten Sitz des Grundgestells eingepresst oder eingeklebt sein.

Das Wälzlager bzw. das Radiallager kann in einer anderen Variante einerseits mit dem Radiallagerabschnitt der Leitungsschutzvorrichtung und andererseits mit dem Rohrbauteil verbunden sein. Die Leitungsschutzvorrichtung kann insoweit drehbar an dem Rohrbauteil bzw. der Hohlwelle des Industrieroboters gelagert sein. Das Wälzlager bzw. das Radiallager ist vorzugsweise außerhalb des Umfangs des Rohrbauteils bzw. der Hohlwelle angeordnet.

Die Erfindung ist anhand eines Ausführungsbeispiels näher erläutert. Alle Merkmale dieses konkreten Ausführungsbeispiels können weitere vorteilhafte Ausgestaltungen der Erfindung offenbaren.

Es zeigen:
- Fig. 1: eine perspektivische Ansicht eines Industrieroboters mit einer erfindungsgemäßen Leitungsschutzvorrichtung;
- Fig. 2: eine perspektivische Ansicht eines ausgeschnittenen Teils des Industrieroboters gemäß Fig. 1 mit der erfindungsgemäßen Leitungsschutzvorrichtung;

- Fig. 3a: eine perspektivische Ansicht einer einteiligen Variante der Leitungsschutzvorrichtung in Alleinstellung;
- Fig. 3b: eine perspektivische Ansicht einer zweiteiligen längs geschnittenen Variante der Leitungsschutzvorrichtung in Alleinstellung;
- Fig. 4a: eine vergrößerte Schnittansicht der Leitungsschutzvorrichtung mit einem Gleitlager;
- Fig. 4b: eine vergrößerte Schnittansicht der Leitungsschutzvorrichtung mit einem Wälzlager.

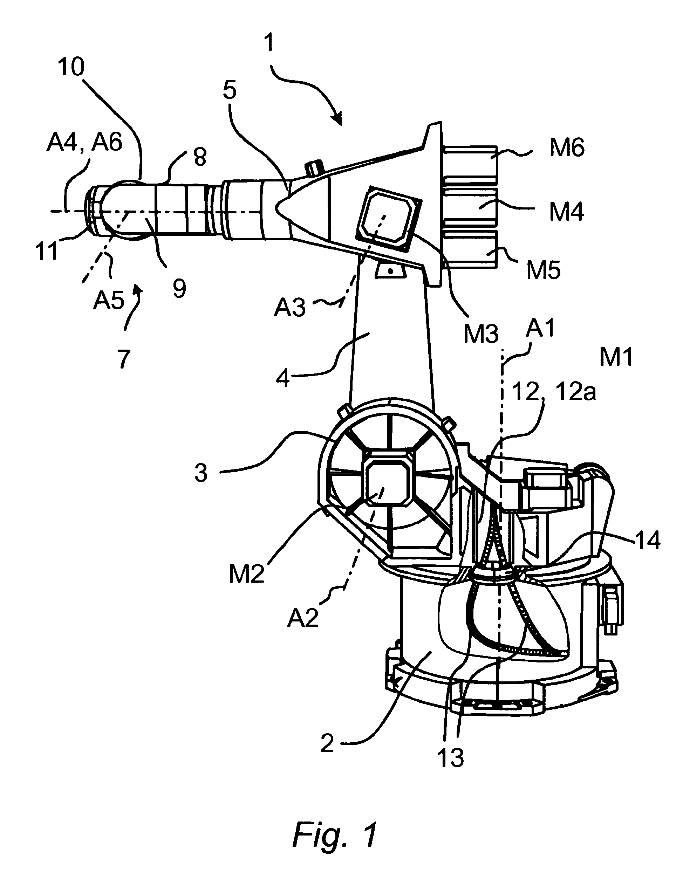

Die Fig. 1 zeigt einen Industrieroboter 1 mit einem Grundgestell 2 an dem ein Karussell 3 um eine erste vertikale Achse A1 drehbar gelagert und mittels eines ersten Antriebsmotors M1 drehangetrieben ist. An dem Karussell 3 ist eine Schwinge 4 um eine zweite horizontale Achse A2 auf und ab schwenkbar gelagert und mittels eines zweiten Antriebsmotors M2 drehangetrieben. Die Schwinge 4 trägt einen Arm 5, der um eine dritte horizontale Achse A3 auf und ab schwenkbar gelagert und mittels eines dritten Antriebsmotors M3 drehangetrieben ist. An dem Arm 5 ist eine vierte Achse A4 vorgesehen, welche in Längserstreckung des Armes 5 verläuft und über einen vierten Antriebsmotors M4 eine Hand 7 des Arms 5 drehantreibt. Von der Hand 7 erstrecken sich ein erster Schenkel 8 und ein zweiter Schenkel 9 gabelförmig nach vorne. Die beiden Schenkel 8 und 9 tragen eine Lagerung für ein freies Ende 10 der Hand 7. Die Lagerung definiert eine fünfte Achse A5 des Industrieroboters 1, um welche die Hand 7 mittels eines fünften Antriebsmotors M5 schwenkbar bewegt werden kann. Ergänzend weist die Hand 7 eine sechste Achse A6 auf, um einen Befestigungsflansch 11 mittels eines sechsten Antriebsmotors M6 drehbar antreiben zu können.

Im dargestellten Ausführungsbeispiel weist das Karussell 3 ein Rohrbauteil 12 auf, das eine Hohlwelle 12a des Industrieroboters 1 bildet. Das Rohrbauteil 12 ist fest mit dem Karussell 3 verbunden. Durch den Hohlraum des Rohrbauteils 12 sind im Ausführungsbeispiel zwei Energieleitungen 13 hindurchgeführt. An einem unteren Ende des Rohrbauteils 12 ist die erfindungsgemäße Leitungsschutzvorrichtung 14 angeordnet. Die Leitungsschutzvorrichtung 14 ist drehbar am Karussell 3 gelagert.

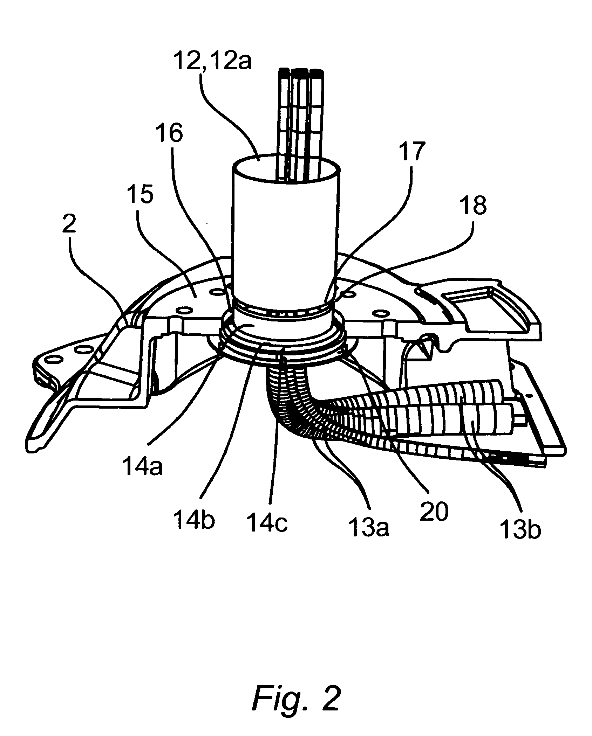

In Fig. 2 ist ein ausgeschnittener Teil des Industrieroboters 1 mit der erfindungsgemäßen Leitungsschutzvorrichtung 14 vergrößert dargestellt. Ein Boden 15, der Teil des Grundgestells 2 ist, weist eine zentrale Öffnung 16 auf. Koaxial zur zentralen Öffnung 16 erstreckt sich das Rohrbauteil 12 d.h. die Hohlwelle 12a. Die Hohlwelle 12a kann ein Teil eines nicht dargestellten Planetengetriebes sein, welches das auf dem Grundgestell 2 gelagerte Karussell 3 drehbar antreibt.

An eine Stirnseite 17 des Rohrbauteils 12 fügt sich unter Belassen eines geringfügigen Spaltes 18 der Hohlzylinderabschnitt 14a der Leitungsschutzvorrichtung 14 nahezu bündig anschließend an das Rohrbauteil 12 an. Der Hohlzylinderabschnitt 14a weist einen Innendurchmesser auf, der dem Innendurchmesser des Rohrbauteils 12 entspricht bzw. an diesen angepasst ist. Der Hohlzylinderabschnitt 14a der Leitungsschutzvorrichtung 14 und das Rohrbauteil 12 stoßen stirnseitig nahezu aneinander bzw. fluchten miteinander unter belassen des Spaltes 18.

Der Hohlzylinderabschnitt 14a der Leitungsschutzvorrichtung 14 ist über einen Grundringabschnitt 14b mit einem Radiallagerabschnitt 14c der Leitungsschutzvorrichtung 14 verbunden. Der Radiallagerabschnitt 14c ist im dargestellten Ausführungsbeispiel als Gleitlager ausgebildet.

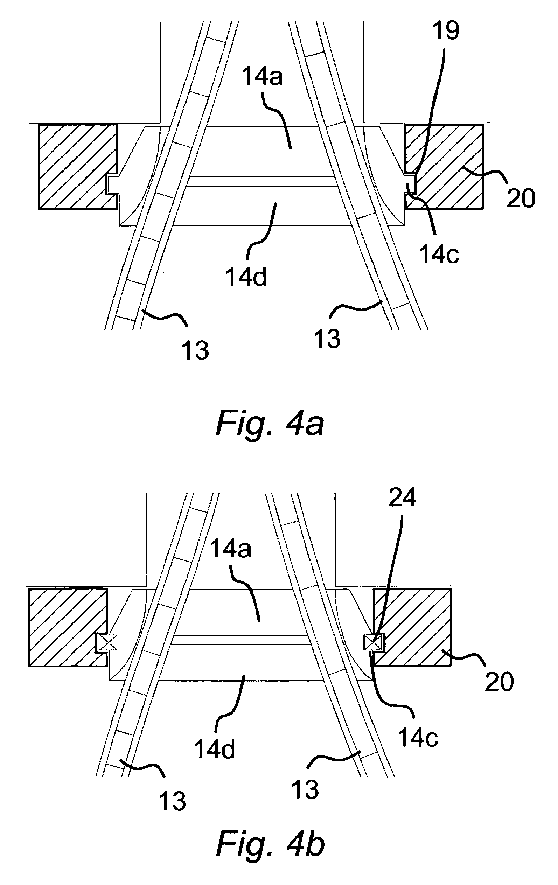

Der Radiallagerabschnitt 14c bildet dabei eine umfangsseitig der Leitungsschutzvorrichtung 14 radial vorstehenden Ringvorsprung. Der radial vorstehende Ringvorsprung der Leitungsschutzvorrichtung 14 ist ausgebildet, in eine korrespondierende Ringnut 19 (Fig. 4a) eines Tragbauteils 20 einzugreifen. Im vorliegenden Ausführungsbeispiel ist das Tragbauteil 20 als gesonderter Tragring ausgebildet, der an dem Grundgestell 2 befestigt ist. Durch das Rohrbauteil 12 führen als Energieleitungen 13 zwei Roboterkabelsätze 13a und zwei Energiezuführungen 13b.

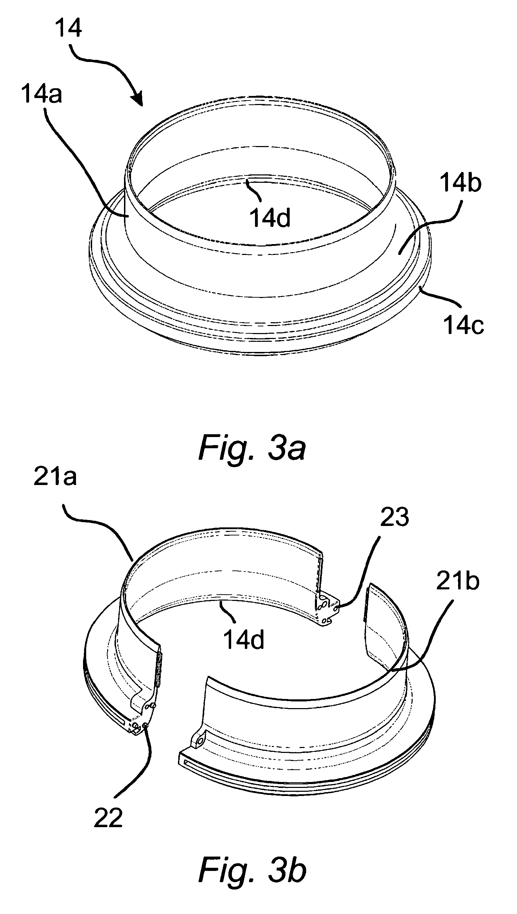

Die Leitungsschutzvorrichtung 14 ist als einstückiges Bauteil in Fig. 3a in Alleinstellung gezeigt. Der Grundringabschnitt 14b der Leitungsschutzvorrichtung 14 trägt den sich in Fig. 3a nach oben erstreckenden Hohlzylinderabschnitt 14a und den seitlich radial nach außen weisenden Radiallagerabschnitt 14c. Wie in Fig. 3b dargestellt kann Die Leitungsschutzvorrichtung 14 mehrteilig und insbesondere wie gezeigt zweiteilig ausgebildet sein. Die Leitungsschutzvorrichtung 14 ist im dargestellten Ausführungsbeispiel längs geschnitten in zwei gleichartige C-förmige Halbschalen 21a und 21b. Die beiden Halbschalen 21a und 21b können mittels Ausrichtstiften 22 und Ausrichtbohrungen 23 passgenau zusammenzufügen sein. An einer unteren inneren Kante der Leitungsschutzvorrichtung 14 ist der Innenkantenabrundungsabschnitt 14d vorgesehen.

In der Ausgestaltung gemäß Fig. 4a bildet der Radiallagerabschnitt 14c die Lagerfläche eines Gleitlagers. Der Radiallagerabschnitt 14c weist von einem umfangsseitig der Leitungsschutzvorrichtung 14 radial vorstehenden Ringvorsprung auf. In diesem Fall ist der radial vorstehende Ringvorsprung der Leitungsschutzvorrichtung 14 ausgebildet, in die korrespondierende Ringnut 19 des Tragbauteils 20 einzugreifen. Das Tragbauteil 20 kann, wie in Fig. 4 a angedeutet, beispielsweise durch das Grundgestell 2 des Industrieroboters 1 gebildet werden.

In einer zur Fig. 4a alternativen Ausgestaltung gemäß Fig. 4b ist das Gleitlager durch ein Wälzlager 24 ersetzt. Der Radiallagerabschnitt 14c der Leitungsschutzvorrichtung 14 bildet dabei einen nutartigen Sitz für einen Innenring des Wälzlagers 24. Ein Außenring des Wälzlagers 24 ist im Ausführungsbeispiel an dem Tragbauteil 20 festgesetzt.

## Patentansprüche

1. Industrieroboter (1), aufweisend:
- ein Grundgestell (2),
- ein Karussell (3),
- ein zwischen Grundgestell (2) und Kerussell (3) angeordnetes, sich bezüglich des Grundgestells (2) oder des Karussells (3) drehendes Rohrbauteil(12), durch das wenigstens eine Energieleitung (13) geführt ist, und
- eine Leitungsschutzvorrichtung (14), aufweisend:
- einen Grundringabschnitt(14b),
- einen Hohlzylinderabschnitt (14a), dessen Durchmesser an einen Innendurchmesser des sich bezüglich der Leitungsschutzvorrichtung (14) drehenden Rohrbauteils (12) angepasst ist,
- einen Innenkantenabrundungsabschnitt (14d), dessen Abrundungsradius an einen Durchmesser der Energieleitung (13) angepasst ist, und
- einen Radiallagerabschnitt (14c) zur drehbaren Lagerung der Leitungsschutzvorrichtung (14) bezüglich des Rohrbauteils (12).

2. Industrieroboter nach Anspruch 1, bei welcher der Radiallagerabschnitt (14c) der Leitungsschutzvorrichtung (14) die Lagerfläche eines Gleitlagers bildet.

3. Industrieroboter nach Anspruch 1, bei welcher der Radiallagerabschnitt (14c) der Leitungsschutzvorrichtung (14) einen Sitz für ein separates Wälzlager, insbesondere Radiallager bildet.

4. Industrieroboter nach einem der Ansprüche 1 bis 3, bei welcher der Hohlzylinderabschnitt (14a) der Leitungsschutzvorrichtung (14) zum Einschieben in das Rohrbauteil (12) einen Außendurchmesser aufweist, der passgenau oder mit geringem Spiel an den Innendurchmesser des Rohrbauteils (12) angepasst ist.

5. Industrieroboter nach einem der Ansprüche 1 bis 3, bei welcher der Hohlzylinderabschnitt (14a) der Leitungsschutzvorrichtung (14) zum bündigen Anschließen an das Rohrbauteil (12) einen Innendurchmesser aufweist, der dem Innendurchmesser des Rohrbauteils (12) entspricht.

6. Industrieroboter nach einem der Ansprüche 1 bis 5, bei dem die Leitungsschutzvorrichtung (14) mehrteilig, insbesondere zweiteilig längs geschnitten ausgebildet ist.

7. Industrieroboter nach einem der Ansprüche 1 bis 6, bei welchem das Rohrbauteil (12) fest mit dem Grundgestell (2) verbunden ist.

8. Industrieroboter nach einem der Ansprüche 1 bis 6, bei welchem das Rohrbauteil (12) fest mit dem Karussell (3) verbunden ist.

9. Industrieroboter nach einem der Ansprüche 1 bis 9, aufweisend ein Wälzlager, insbesondere Radiallager zum drehbaren Lagern der Leitungsschutzvorrichtung (14) bezüglich des Rohrbauteils (12).

10. Industrieroboter nach Anspruch 9, bei welchem das Wälzlager einerseits mit dem Radiallagerabschnitt (14c) der Leitungsschutzvorrichtung (14) und andererseits mit dem Grundgestell (2) verbunden ist.

11. Industrieroboter nach Anspruch 9, bei welchem das Wälzlager einerseits mit dem Radiallagerabschnitt (14c) der Leitungsschutzvorrichtung (14) und andererseits mit dem Rohrbauteil (12) verbunden ist.

## Claims

1. Industrial robot (1) comprising:
- main frame (2),
- a carousel (3),
- a pipe component (12) arranged between the main frame (2) and carousel (3) that rotates relative to the main frame (2) or the carousel (3), by means of which pipe component at least one power cable (13) is guided, and
- a cable protection device (14) comprising:
- a main ring section (14b),
- a hollow cylinder section (14a), the diameter of which is adjusted to an inner diameter of the pipe component (12) that rotates relative to the cable protection device (14),
- an inner edge rounding section (14d), the rounding radius of which is adjusted to a diameter of the power cable (13), and
- a radial bearing section (14c) for the rotatable bearing of the cable protection device (14) relative to the pipe component (12).

2. Industrial robot according to claim 1, in which the radial bearing section (14c) of the cable protection device (14) forms the bearing surface of an anti-frictional bearing.

3. Industrial robot according to claim 1, in which the radial bearing section (14c) of the cable protection device (14) forms a seat for a separate roller bearing, in particular a radial bearing.

4. Industrial robot according to any one of claims 1 to 3, in which the hollow cylinder section (14a) of the cable protection device (14) for inserting into the pipe component (12) has an external diameter, which is adjusted to fit exactly or with a small amount of play to the internal diameter of the pipe component (12).

5. Industrial robot according to any one of claims 1 to 3, in which the hollow cylinder section (14a) of the cable protection device (14) for connecting flush with the pipe component (12) has an inner diameter which corresponds to the inner diameter of the pipe component (12).

6. Industrial robot according to any one of claims 1 to 5, in which the cable protection device (14) consists of multiple parts, in particular two parts in longitudinal cross section.

7. Industrial robot according to any one of claims 1 to 6, in which the pipe component (12) is connected securely to the main frame (2).

8. Industrial robot according to any one of claims 1 to 6, in which the pipe component (12) is connected securely to the carousel (3).

9. Industrial robot according to any one of claims 1 to 8, comprising a roller bearing, in particular a radial bearing for rotatably bearing the cable protection device (14) relative to the pipe component (12).

10. Industrial robot according to claim 9, in which the roller bearing is connected on the one hand to the radial bearing section (14c) of the cable protection device (14) and on the other hand to the main frame (2).

11. Industrial robot according to claim 9, in which the roller bearing is connected on the one hand to the radial bearing section (14c) of the cable protection device (14) and on the other hand to the pipe component (12).

## Revendications

1. Robot industriel (1) présentant :
- un bâti de base (2),
- un carrousel (3),
- un composant tubulaire (12) agencé entre le bâti de base (2) et le carrousel (3) et tournant par rapport au bâti de base (2) ou au carrousel (3), à travers lequel passe au moins une ligne d'énergie (13), et
- un dispositif de protection de ligne (14) présentant :
- un tronçon annulaire de base (14b)
- un tronçon de cylindre creux (14a) dont le diamètre est adapté à un diamètre intérieur du composant tubulaire (12) rotatif par rapport au dispositif de protection de ligne (14),
- un tronçon en arrondi d'arête intérieure (14) dont le rayon en arrondi est adapté à un diamètre de la ligne d'énergie (13), et
- un tronçon de palier radial (14c) pour le montage rotatif du dispositif de protection de ligne (14) par rapport au composant tubulaire (12).

2. Robot industriel selon la revendication 1, dans lequel le tronçon de palier radial (14c) du dispositif de protection de ligne (14) forme la surface d'appui d'un palier à glissement.

3. Robot industriel selon la revendication 1, dans lequel le tronçon de palier radial (14c) du dispositif de protection de ligne (14) forme un siège pour un palier à roulement séparé, en particulier un palier radial.

4. Robot industriel selon l'une des revendications 1 à 3, dans lequel le tronçon de cylindre creux (14a) du dispositif de protection de ligne (14) présente pour l'introduction dans le composant tubulaire (12) un diamètre extérieur qui est adapté avec ajustage précis ou avec faible jeu au diamètre intérieur du composant tubulaire (12)

5. Robot industriel selon l'une des revendications 1 à 3, dans lequel le tronçon de cylindre creux (14a) du dispositif de protection de ligne (14) présente pour le raccordement en affleurement avec le composant tubulaire (12) un diamètre intérieur qui correspond au diamètre intérieur du composant tubulaire (12).

6. Robot industriel selon l'une des revendications 1 à 5, dans lequel le dispositif de protection de ligne (14) est réalisé en plusieurs parties, en particulier coupé en longueur en deux parties.

7. Robot industriel selon l'une des revendications 1 à 6, dans lequel le composant tubulaire (12) est relié de manière solidaire au bâti de base (2).

8. Robot industriel selon l'une des revendications 1 à 6, dans lequel le composant tubulaire (12) est relié de manière solidaire au carrousel (3).

9. Robot industriel selon l'une des revendications 1 à 8, présentant un palier à roulement, en particulier un palier radial pour monter en rotation le dispositif de protection de ligne (14) par rapport au composant tubulaire (12).

10. Robot industriel selon la revendication 9, dans lequel le palier à roulement est relié d'une part au tronçon de palier radial (14c) du dispositif de protection de ligne (14) et d'autre part au bâti de base (2).

11. Robot industriel selon la revendication 9, dans lequel le palier à roulement est relié d'une part au tronçon de palier radial (14c) du dispositif de protection de ligne (14) et d'autre part au composant tubulaire (12).
